# EUROPEAN PATENT APPLICATION

(11) **EP 1 515 492 A1**
(43) Date of publication of application: **16.03.2005**
(21) Application number: 04012668.2
(22) Date of filing: 28.05.2004
(51) Int. Cl.: H04L 12/56

(54) **Congestion management in telecommunications networks**

(30) Priority: 15.09.2003 US 662724
(71) Applicant: Avaya Technology Corp., Basking Ridge, New Jersey 07920-2332 (US)
(72) Inventor: Garg, Sachin, Grenn Brook New Jersey 08812 (US); Kappes, Martin, Bridgewater New Jersey 08807 (US)
(74) Representative: Schneck, Herbert, Dipl.-Phys., Dr.

(57) **Abstract**

A technique for lessening the likelihood of congestion in a congestible node is disclosed. In accordance with the illustrative embodiments of the present invention, one node - a proxy node - drops protocol data units to lessen the likelihood of congestion in the congestible node. In some embodiments of the present invention, the proxy node receives a metric of a queue at a congestible node and, based on the metric, decides whether to drop protocol data units *en route* to the congestible node. In some other embodiments of the present invention, the proxy node *estimates* a metric of a queue at a congestible node and, based on the metric, decides whether to drop protocol data units *en route* to the congestible node.

## Description

### Field of the Invention

The present invention relates to telecommunications in general, and, more particularly, to congestion management in telecommunications networks.

### Background of the Invention

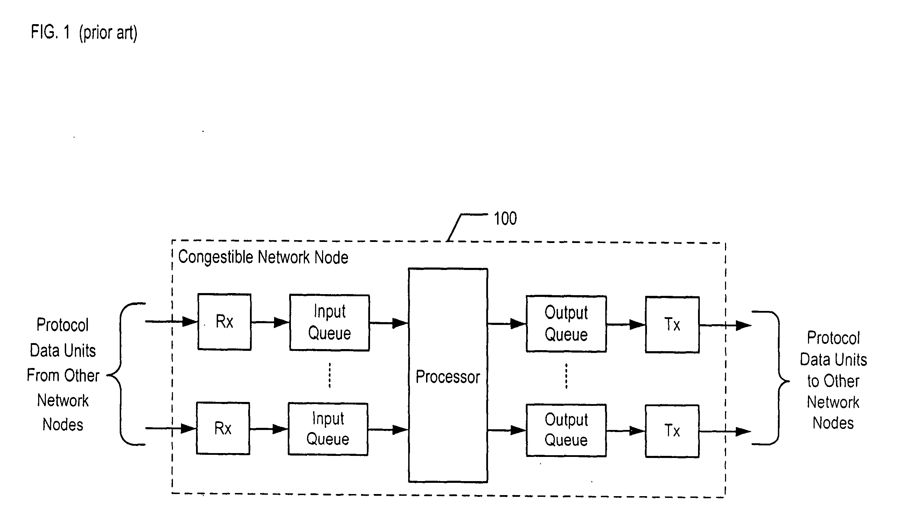

In a store-and-forward telecommunications network, each network node passes protocol data units to the next node, in bucket-brigade fashion, until the protocol data units arrive at their final destination. A network node can have a variety of names (*e.g.* "switch," "router," "access point," *etc*.) and can perform a variety of functions, but it always has the ability to receive a protocol data unit on one input link and transmit it on one or more output links. Figure 1 depicts a block diagram of the salient components of a typical network node in the prior art.

For the purposes of this specification, a **"protocol data unit"** is defined as the data object that is exchanged by entities. Typically, a protocol data unit exists at a layer of a multi-layered communication protocol and is exchanged across one or more network nodes. A "frame," a "packet," and a "datagram" are typical protocol data units.

In some cases, a protocol data unit might spend a relatively brief time in a network node before it is processed and transmitted on an output link. In other cases, a protocol data unit might spend a long time.

One reason why a protocol data unit might spend a long time in a network node is because the output link on which the protocol data unit is to be transmitted is temporarily unavailable. Another reason why a protocol data unit might spend a long time in a network node is because a large number of protocol data units arrive at the node faster than the node can process and output them.

Under conditions such as these, a network node typically stores or "queues" a protocol data unit until it is transmitted. Sometimes, the protocol data units are stored in an "input queue" and sometimes the protocol data units are stored in an "output queue." An input queue might be employed when protocol data units arrive at the network node (in the short run) more quickly than they can be processed. An output queue might be employed when protocol data units arrive and are processed (in the short run) more quickly than they can be transmitted on the output link.

A queue has a finite capacity, and, therefore, it can fill up with protocol data units. When a queue is filled, the attempted addition of protocol data units to the queue causes the queue to "overflow" with the result that the newly arrived protocol data units are discarded or "dropped." Dropped protocol units are forever lost and do not leave the network node.

A network node that comprises a queue that is dropping protocol data units is called "congested." For the purposes of this specification, a **"congestible node"** is defined as a network node (e.g. a switch, router, access point, etc.) that is susceptible to dropping protocol data units.

The loss of a protocol data unit has a negative impact on the intended end user of the protocol data unit, but the loss of any one protocol data unit does not have the same degree of impact as every other protocol data unit. In other words, the loss of some protocol data units is more injurious than the loss of some other protocol data units.

When a node is congested, or close to becoming congested, it can be prudent for the node to intentionally and proactively drop one or more protocol data units whose loss will be less consequential than to allow arriving protocol data units to overflow and be dropped and whose loss might be more consequential. To accomplish this, the node can employ an algorithm to intelligently identify:
(1) which protocol data units to drop,
(2) how many protocol data units to drop, and
(3) when to drop those protocol data units,
in order to:
(a) reduce injury to the affected communications, and
(b) lessen the likelihood of congestion in the congestible node.
One example of an algorithm to mitigate congestion in congestible nodes is the well-known Random Early Detection algorithm, which is also known as the Random Early Discard Algorithm.

Some legacy nodes, however, were not designed to intentionally drop a protocol data unit and it is often technically or economically difficult to retrofit them to add that functionality. Furthermore, it can be prohibitively expensive to build nodes that have the computing horsepower needed to run an algorithm such as Random Early Discard or Random Early Detection.

Therefore, the need exists for a new technique for ameliorating the congestion in network nodes without some of the costs and disadvantages associated with techniques in the prior art.

### Summary of the Invention

The present invention is a technique for lessening the likelihood of congestion in a congestible node without some of the costs and disadvantages for doing so in the prior art. In accordance with the illustrative embodiments of the present invention, one node - a proxy node - drops protocol data units to lessen the likelihood of congestion in the congestible node.

The illustrative embodiments of the present invention are useful because they lessen the likelihood of congestion in legacy nodes. Furthermore, the illustrative embodiments are useful with new "lightweight" nodes because the proxy nodes enable the lightweight nodes to be built without the horsepower needed to run a discard algorithm such as Random Early Detection.

In some embodiments of the present invention, the proxy node receives a metric of a queue at a congestible node and, based on the metric, decides whether to drop protocol data units *en route* to the congestible node.

In some other embodiments of the present invention, the proxy node *estimates* a metric of a queue at a congestible node and, based on the metric, decides whether to drop protocol data units *en route* to the congestible node.

In addition to the metric, the protocol data unit dropping decision can also be made based on a queue management technique such as Random Early Detection, thus realizing the benefits of that technique even though Random Early Detection (or another queue management technique) is not performed at the congestible node.

In these embodiments queue management is done on a *proxy* basis, that is, by one network node, not itself necessarily prone to congestion, on behalf of another network node that is prone to congestion. Since queue management is done on another network node, the congestible node can be a light-weight node or a legacy node and still receive the benefits of queue management.

An illustrative embodiment of the present invention comprises: receiving at a protocol-data-unit excisor a metric of a queue in a first congestible node; and selectively dropping, at the protocol-data-unit excisor, one or more protocol data units *en route* to the first congestible node based on the metric of the queue in the first congestible node.

### Brief Description of the Drawing

Figure 1 depicts a block diagram of the salient components of a typical network node in the prior art.

Figure 2 depicts a block diagram of the first illustrative embodiment of the present invention.

Figure 3 depicts a block diagram of the salient components of a switch and protocol-data-unit excisor in accordance with the first embodiment of the present invention.

Figure 4 depicts a block diagram of the salient components of a protocol-data-unit excisor in accordance with the first embodiment of the present invention.

Figure 5 depicts an overview flow chart of a method for deciding whether to drop a protocol data unit *en route* to a congestible node, in accordance with the first illustrative embodiment of the present invention.

Figure 6 depicts a flow chart of the subtasks comprising the method depicted in Figure 5.

Figure 7 depicts a block diagram of the second illustrative embodiment of the present invention.

Figure 8 depicts a block diagram of the salient components of a switch and protocol-data-unit excisor in accordance with the second embodiment of the present invention.

Figure 9 depicts a block diagram of the salient components of a protocol-data-unit excisor in accordance with the second embodiment of the present invention.

Figure 10 depicts an overview flow chart of a method for deciding whether to drop a protocol data unit *en route* to a congestible node, in accordance with the first illustrative embodiment of the present invention.

### Detailed Description

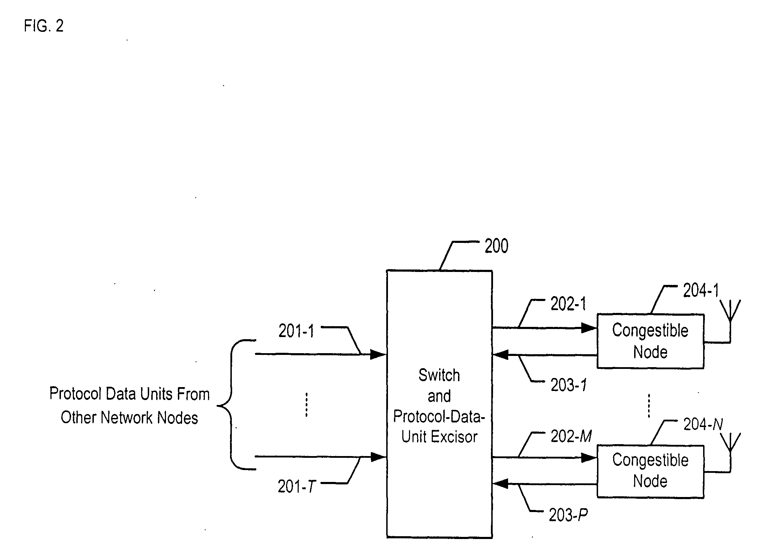

Figure 2 depicts a block diagram of the first illustrative embodiment of the present invention, which is switch and protocol-data-unit excisor 200. Switch and protocol-data-unit excisor 200 comprises *T* inputs (201-1 through 201-*T*), *M* outputs (202-1 through 202-*M*), *P* inputs (203-1 through 203-*P*), and *N* congestible nodes (204-1 through 204-*N*), wherein *M*, *N, P,* and *T* are each positive integers.

Switch and protocol-data-unit excisor 200 has two principal functions. First, it switches protocol data units from each of inputs 201-1 through 201-*T* to one or more of outputs 202-1 through 202-*M*, and second it selectively drops protocol data units to ameliorate congestion in one or more of congestible nodes 204-1 through 204-*N*. In other words, some protocol data units enter switch and protocol-data-unit excisor 200 but do not leave it.

In accordance with the first illustrative embodiment of the present invention, both functions are performed by one mechanically-integrated node. It will be clear to those skilled in the art, however, after reading this specification, how to make and use embodiments of the present invention that perform the two functions in a plurality of non-mechanically-integrated nodes.

Each of inputs 201-1 through 201-*T* represents a logical or physical link on which protocol data units flow into switch and protocol-data-unit excisor 200.

Each link represented by one of inputs 201-1 through 201-*T* can be implemented in a variety of ways. For example, in some embodiments of the present invention such a link can be realized as a separate physical link. In other embodiments such a link can be realized as a logical channel on a multiplexed line. It will be clear to those skilled in the art, after reading this specification, how to implement the links represented by inputs 201-1 through 201-*T*.

Each of outputs 202-1 through 202-*M* represents a logical or physical link on which protocol data units flow from switch and protocol-data-unit excisor 200 toward a congestible node. In the first illustrative embodiment of the present invention, switch and protocol-data-unit excisor 200 is less susceptible to congestion than is the congestible nodes fed by switch and protocol-data-unit excisor 200.

Each link represented by one of inputs 202-1 through 202-*M* can be implemented in a variety of ways. For example, in some embodiments of the present invention such a link can be realized as a separate physical link. In other embodiments such a link can be realized as a logical channel on a multiplexed line. It will be clear to those skilled in the art, after reading this specification, how to implement the links represented by inputs 202-1 through 202-*M*.

Each of inputs 203-1 through 203-*P* represents a logical or physical link on which one or more metrics of a queue in a congestible node arrives at switch and protocol-data-unit excisor 200.

Each link represented by one of inputs 203-1 through 203-*P* can be implemented in a variety of ways. For example, in some embodiments of the present invention such a link can be realized as a separate physical link. In other embodiments such a link can be realized as a logical channel on a multiplexed line, or as an Internet Protocol address to which datagrams carrying the metrics are directed. It will be clear to those skilled in the art, after reading this specification, how to implement the links represented by inputs 203-1 through 203-*P*.

A metric of a queue represents information about the status of the queue. In some embodiments of the present invention, a metric can indicate the status of a queue at one moment (*e.g.*, the current length of the queue, the greatest sojourn time of a protocol data unit in the queue, *etc*.). In some alternative embodiments of the present invention, a metric can indicate the status of a queue during a time interval (*e.g.*, an average queue length, the average sojourn time of a protocol data unit in the queue, *etc*.). It will be clear to those skilled in the art how to formulate these and other metrics of a queue.

Each of congestible nodes 204-1 through 204-*N* represents a network node that comprises a queue (not shown) that stores one or more protocol data units from switch and protocol-data-unit excisor 200 and generates the metric or metrics fed back to switch and protocol-data-unit excisor 200. It will be clear to those skilled in the art how to make and use each of congestible nodes 204-1 through 204-*N*.

In accordance with the illustrative embodiment, *M* = *N* = *P.* It will be clear to those skilled in the art, however, after reading this specification, how to make and use embodiments of the present invention in which:
i. *M ≠ N* (because, for example, one or more congestible nodes accepts more than one of outputs 202-1 through 202-*M*), or
ii. *M ≠ P* (because, for example, one or more of outputs 202-1 through 202-*M* feeds more than one queue), or
iii. *N ≠ P* (because, for example, one or more congestible nodes generates more than one metric), or
iv. any combination of i, ii, and iii.

In order to mitigate the occurrence of congestion at the congestible nodes, switch and protocol-data-unit excisor 200 selectively drops protocol data units which are en *route* to a queue in a congestible node. In the first illustrative embodiment of the present invention, switch and protocol-data-unit excisor 200 decides whether to drop a protocol data unit *en route* to queue 210-*i* in a congestible node by performing an instance of Random Early Detection using a metric received on input 203-*i* as a Random Early Detection parameter.

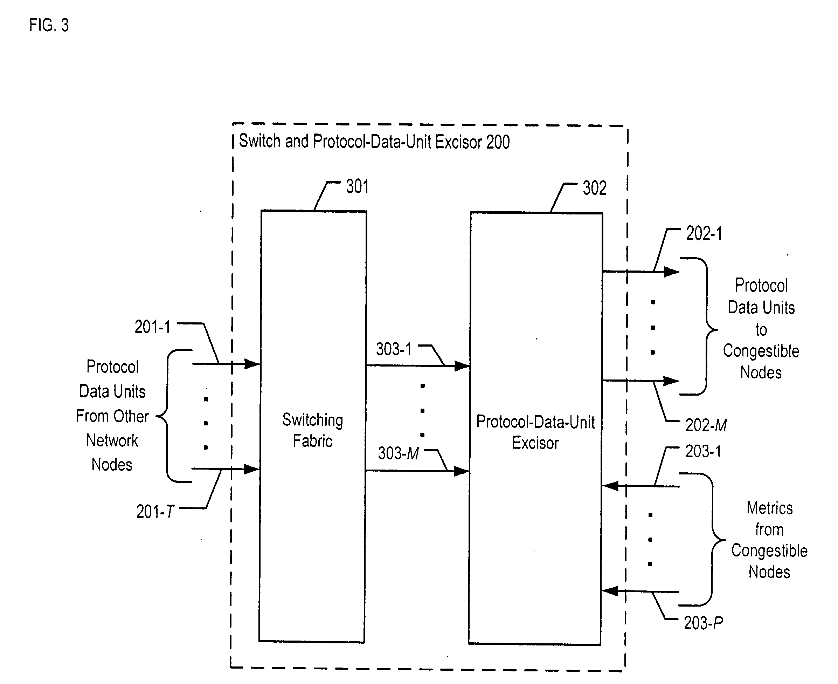

Figure 3 depicts a block diagram of the salient components of switch and protocol-data-unit excisor 200. Switch and protocol-data-unit excisor 200 comprises: switching fabric 301, protocol-data-unit excisor 302, links 303-1 through 303-*M*, inputs 201-1 through 201-*T*, outputs 202-1 through 202-*M*, and inputs 203-1 through 203-*P*, interconnected as shown.

Switching fabric 301 accepts protocol data units on each of inputs 201-1 through 201-*T* and switches them to one or more of links 303-1 through 303-*M*, in well-known fashion. It will be clear to those skilled in the art how to make and use switching fabric 301.

Each of links 303-1 through 303-*M* carries protocol data units from switching fabric 301 to protocol-data-unit excisor 302. Each of links 303-1 through 303-*M* can be implemented in various ways, for example as a distinct physical channel or as a logical channel on a multiplexed medium, such as a time-multiplexed bus. In the first illustrative embodiment of the present invention, each of links 303-1 through 303-*M* corresponds to one of outputs 202-1 through 202-*M*, such that a protocol data unit arriving at protocol-data-unit excisor 302 on link 303-*m* exits protocol-data-unit excisor 302 on output 202-*m*, unless it is *dropped* within protocol-data-unit excisor 302.

In Figure 3, switching fabric 301 and protocol-data-unit excisor 302 are depicted as distinct entities, but it will be dear to those skilled in the art, after reading this specification, how to make and use embodiments of the present invention in which the two entities are fabricated as one.

Furthermore, switching fabric 301 and protocol-data-unit excisor 302 are depicted in Figure 3 as being within a single integrated housing. It will be clear to those skilled in the art, however, after reading this specification, how to make and use embodiments of the present invention in which switching fabric 301 and protocol-data-unit excisor 302 are manufactured and sold separately, perhaps even by different enterprises.

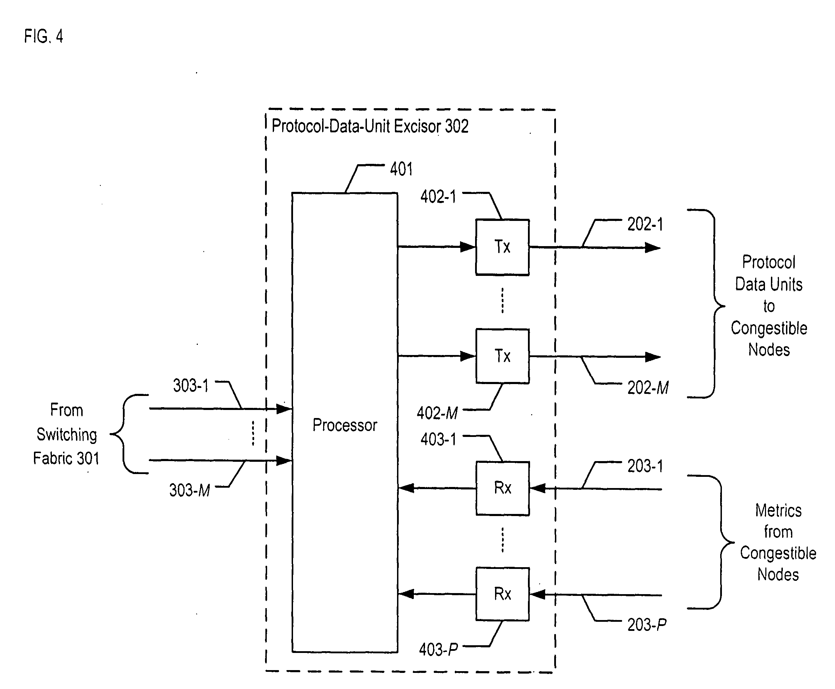

Figure 4 depicts a block diagram of the salient components of protocol-data-unit-excisor 302 in accordance with the first illustrative embodiment of the present invention. Protocol-data-unit excisor 302 comprises processor 401, transmitters 402-1 through 402-*M*, and receivers 403-1 through 403-*P*, interconnected as shown.

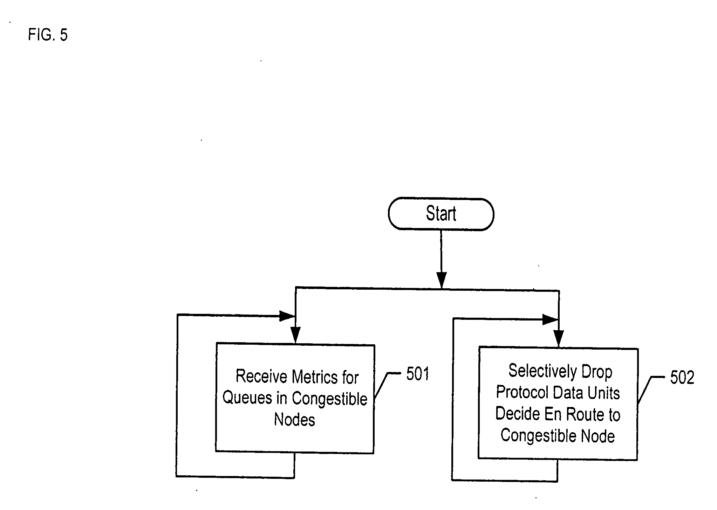

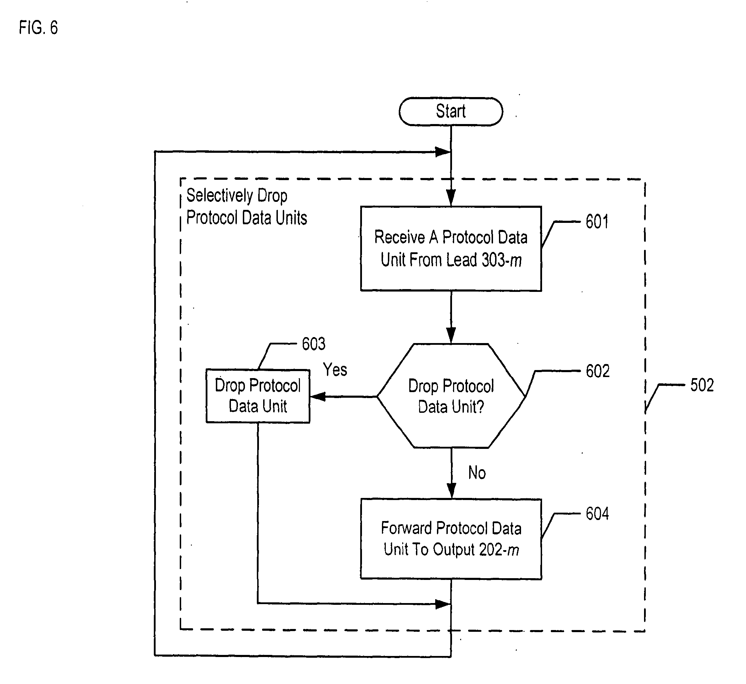

Processor 401 is a general-purpose processor that is capable of performing the functionality described below and with respect to Figures 5 and 6. In some alternative embodiments of the present invention, processor 401 is a special-purpose processor. In either case, it will be clear to those skilled in the art, after reading this specification, how to make and use processor 401.

Transmitter 402-*m* accepts a protocol data unit from processor 401 and transmits it on output 202-*m*, in well-known fashion, depending on the physical and logical protocol for output 202-*m*. It will be clear to those skilled in the art how to make and use each of transmitters 402-1 through 402-*M*.

Receiver 403-*p* receives a metric of a queue in a congestible node on input 203-p, in well-known fashion, and passes the metric to processor 401. It will be clear to those skilled in the art how to make an use receivers 403-1 through 403-*P*.

Figure 5 depicts a flowchart of the salient tasks performed by protocol-data-unit excisor 200 in accordance with the first illustrative embodiment of the present invention. Tasks 501 and 502 run continuously, concurrently, and asynchronously. It will be clear to those skilled in the art, after reading this specification, how to make and use embodiments of the present invention in which tasks 501 and 502 do not run continuously, concurrently, or asynchronously.

At task 501, protocol-data-unit excisor 302 periodically or sporadically receives one or more metrics for the queue associated with each of outputs 202-1 through 202-*M*.

At task 502, protocol-data-unit excisor 302 periodically or sporadically decides whether to drop a protocol data unit *en route* to each of outputs 202-1 through 202-*M*. The details of task 502 are described in detail below and with respect to Figure 6.

Figure 6 depicts a flow chart of the salient subtasks comprising task 502, as shown in Figure 5.

At subtask 601, protocol-data-unit excisor 302 receives a protocol data unit on link 303-*m*, which is *en route* to output 202-*m*.

At subtask 602, protocol-data-unit excisor 302 decides whether to drop the protocol data unit received at subtasks 601 or let it pass to output 202-*m*. In accordance with the illustrative embodiment, the decision is based, at least in part, on the metrics received in task 501 and the well-known Random Early Detection algorithm.

The metric enables protocol-data-unit excisor 302 to estimate the status of the queue fed by output 202-*m* and the Random Early Detection algorithm enables protocol-data-unit excisor 200 to select which protocol data units to drop. The loss of a protocol data unit has a negative impact on the intended end user of the protocol data unit, but the loss of any one protocol data unit does not have the same degree of impact as every other protocol data unit. In other words, the loss of some protocol data units is more injurious than the loss of some other protocol data units.

As is well known to those skilled in the art, some embodiments of the Random Early Detection algorithm intelligently identify:
(1) which protocol data units to drop,
(2) how many protocol data units to drop, and
(3) when to drop those protocol data units,
in order to:
(a) reduce injury to the affected communications, and
(b) lessen the likelihood of congestion in a congestible node.
It will be clear to those skilled in the art how to make and use embodiments of the present invention that use a species of the Random Early Detection algorithm.

In some alternative embodiments of the present invention, protocol-data-unit excisor 302 uses a different algorithm for selecting which protocol data units to drop. For example, protocol-data-unit excisor 302 can drop all of the protocol data units it receives on a given link when the metric associated with that link is above a threshold. In any case, it will be clear to those skilled in the art, after reading this specification, how to make and use embodiments of the present invention that use other algorithms for deciding which protocol data units to drop, how many protocol data units to drop, and when to drop those protocol data units.

When protocol-data-unit excisor 302 decides at task 602 to drop a protocol data unit, control passes to subtask 603; otherwise control passes to task 604.

At subtask 603, protocol-data-unit excisor 302 drops the protocol data unit under consideration. From subtask 603, control passes back to subtask 601 where protocol-data-unit excisor 302 decides whether to drop or forward the next protocol data unit.

At subtask 604, protocol-data-unit excisor 302 forwards the protocol data unit under consideration. From subtask 604, control passes back to subtask 601 where protocol-data-unit excisor 302 decides whether to drop or forward the next protocol data unit.

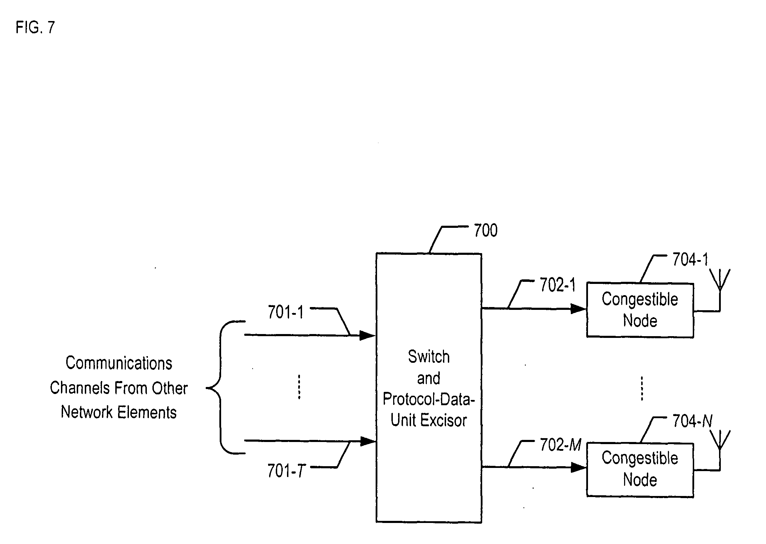

Figure 7 depicts a block diagram of the second illustrative embodiment of the present invention, which is switch and protocol-data-unit excisor 700. Switch and protocol-data-unit excisor 700 comprises *T* inputs (701-1 through 701-*T*), *M* outputs (702-1 through 702-*M*), and *N* congestible nodes (704-1 through 704-*N*), wherein *M, N,* and *T* are each positive integers.

Switch and protocol-data-unit excisor 700 has two principal functions. First, it switches protocol data units from each of inputs 701-1 through 701-*T* to one or more of outputs 702-1 through 702-*M*, and second it selectively drops protocol data units to ameliorate congestion in one or more of congestible nodes 704-1 through 704-N. In other words, some protocol data units enter switch and protocol-data-unit excisor 700 but do not leave it.

In accordance with the second illustrative embodiment of the present invention, both functions are performed by one mechanically-integrated node. It will be clear to those skilled in the art, however, after reading this specification, how to make and use embodiments of the present invention that perform the two functions in a plurality of non-mechanically-integrated nodes.

Each of inputs 701-1 through 701-*T* represents a logical or physical link on which protocol data units flow into switch and protocol-data-unit excisor 700.

Each link represented by one of inputs 701-1 through 701-*T* can be implemented in a variety of ways. For example, in some embodiments of the present invention such a link can be realized as a separate physical link. In other embodiments such a link can be realized as a logical channel on a multiplexed line. It will be clear to those skilled in the art, after reading this specification, how to implement the links represented by inputs 701-1 through 701-*T*.

Each of outputs 702-1 through 702-*M* represents a logical or physical link on which protocol data units flow from switch and protocol-data-unit excisor 700 toward a congestible node. In the second illustrative embodiment of the present invention, switch and protocol-data-unit excisor 700 is less susceptible to congestion than is the congestible nodes fed by switch and protocol-data-unit excisor 700.

Each link represented by one of inputs 702-1 through 702-*M* can be implemented in a variety of ways. For example, in some embodiments of the present invention such a link can be realized as a separate physical link. In other embodiments such a link can be realized as a logical channel on a multiplexed line. It will be clear to those skilled in the art, after reading this specification, how to implement the links represented by inputs 702-1 through 702-*M*.

Each of congestible nodes 704-1 through 704-*N* represents a network node that comprises a queue (not shown) that stores one or more protocol data units from switch and protocol-data-unit excisor 700 and generates the metric or metrics fed back to switch and protocol-data-unit excisor 700. It will be clear to those skilled in the art how to make and use each of congestible nodes 704-1 through 704-*N*.

In accordance with the illustrative embodiment, *M* = *N.* It will be clear to those skilled in the art, however, after reading this specification, how to make and use embodiments of the present invention in which *M ≠ N* (because, for example, one or more congestible nodes accepts more than one of outputs 702-1 through 702-*M*).

In order to mitigate the occurrence of congestion at the congestible nodes, switch and protocol-data-unit excisor 700 selectively drops protocol data units which are *en route* to a queue in a congestible node. In the second illustrative embodiment of the present invention, switch and protocol-data-unit excisor 700 decides whether to drop a protocol data unit *en route* to queue 210-*i* in a congestible node by performing an instance of Random Early Detection using an estimated metric as a Random Early Detection parameter.

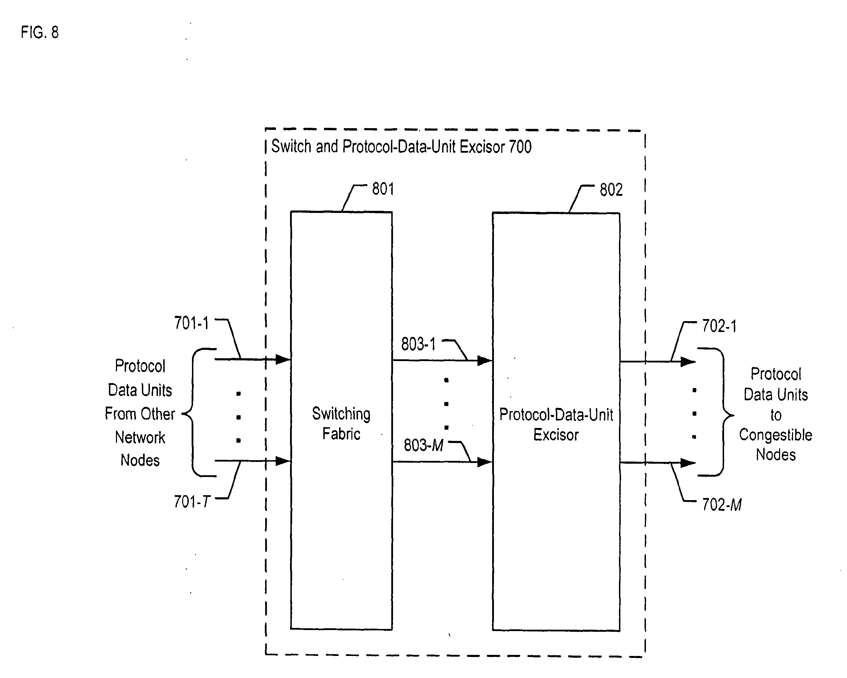

Figure 8 depicts a block diagram of the salient components of switch and protocol-data-unit excisor 700. Switch and protocol-data-unit excisor 700 comprises: inputs 701-1 through 701-*T*, switching fabric 801, protocol-data-unit excisor 802, links 803-1 through 803-*M*, and outputs 702-1 through 702-*M*, interconnected as shown.

Switching fabric 801 accepts protocol data units on each of inputs 701-1 through 701-*T* and switches them to one or more of links 803-1 through 803-*M*, in well-known fashion. It will be clear to those skilled in the art how to make and use switching fabric 801.

Each of links 803-1 through 803-*M* carries protocol data units from switching fabric 801 to protocol-data-unit excisor 802. Each of links 803-1 through 803-*M* can be implemented in various ways, for example as a distinct physical channel or as a logical channel on a multiplexed medium, such as a time-multiplexed bus. In the second illustrative embodiment of the present invention, each of links 803-1 through 803-*M* corresponds to one of outputs 702-1 through 702-*M*, such that a protocol data unit arriving at protocol-data-unit excisor 802 on link 803-m exits protocol-data-unit excisor 802 on output 702-*m*, unless it is *dropped* within protocol-data-unit excisor 802.

In Figure 8, switching fabric 801 and protocol-data-unit excisor 802 are depicted as distinct entities, but it will be clear to those skilled in the art, after reading this specification, how to make and use embodiments of the present invention in which the two entities are fabricated as one.

Furthermore, switching fabric 801 and protocol-data-unit excisor 802 are depicted in Figure 8 as being within a single integrated housing. It will be clear to those skilled in the art, however, after reading this specification, how to make and use embodiments of the present invention in which switching fabric 801 and protocol-data-unit excisor 802 are manufactured and sold separately, perhaps even by different enterprises.

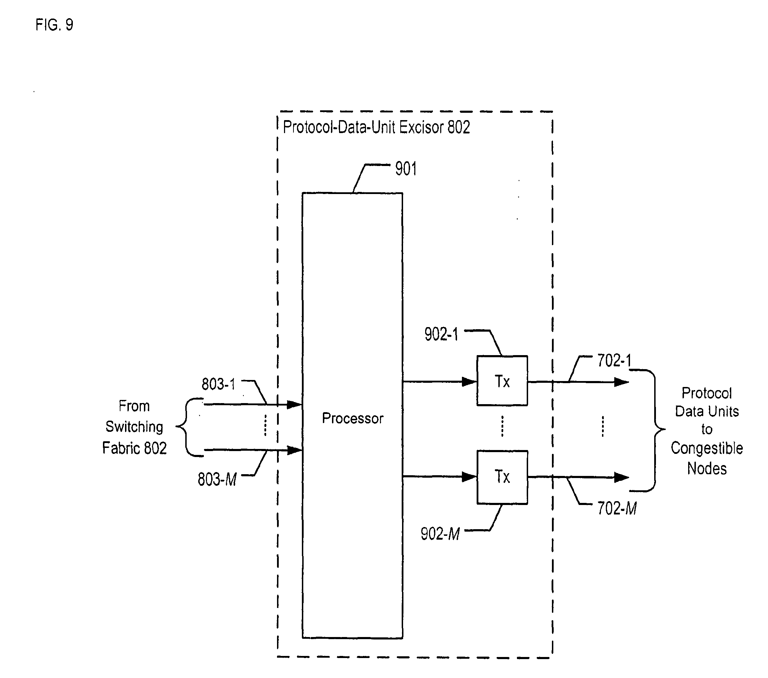

Figure 9 depicts a block diagram of the salient components of protocol-data-unit-excisor 802 in accordance with the second illustrative embodiment of the present invention. Protocol-data-unit excisor 802 comprises processor 901 and transmitters 902-1 through 902-*M*, interconnected as shown.

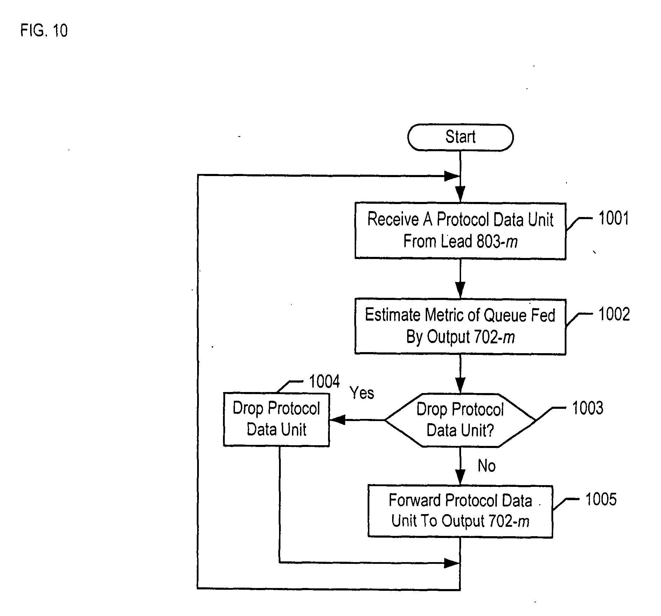

Processor 901 is a general-purpose processor that is capable of performing the functionality described below and with respect to Figure 10. In some alternative embodiments of the present invention, processor 901 is a special-purpose processor. In either case, it will be clear to those skilled in the art, after reading this specification, how to make and use processor 901.

Transmitter 902-*m* accepts a protocol data unit from processor 901 and transmits it on output 702-*m*, in well-known fashion, depending on the physical and logical protocol for output 702-*m.* It will be clear to those skilled in the art how to make and use each of transmitters 902-1 through 902-*M*.

In the first illustrative embodiment of the present invention, the queue metrics were received by protocol-data-unit excisor 802 by an external source (*e.g.,* the congestible node, *etc.*) that was able to calculate and transmit the metric. In contrast, the second illustrative embodiment does not receive the metric from an external source but rather generates the metric itself based on watching each flow of protocol data units. This is described below and with respect to Figure 10.

Figure 10 depicts a flow chart of the salient tasks performed by the second illustrative embodiment of the present invention.

At task 1001, protocol-data-unit excisor 802 receives a protocol data unit on link 803-*m*, which is *en route* to output 702-*m*.

At task 1002, protocol-data-unit excisor 802 estimates a metric for a queue that is associated with output 702-*m.* In accordance with the second illustrative embodiment, this metric is based on:
i. the combined size of all of the protocol data units that have been output by protocol-data-unit excisor 802 on output 702-m within a given interval, or
ii. the number of protocol data units that have been output by protocol-data-unit excisor 802 on output 702-m within a given interval, or
iii. the rate at which protocol data units that have been output by protocol-data-unit excisor 802 on output 702-m, or
iv. any combination of i, ii, and iii.
It will be clear to those skilled in the art how to enable protocol-data-unit excisor 802 to perform task 1002.

At subtask 1003, protocol-data-unit excisor 802 decides whether to drop the protocol data unit received at task 1001 or let it pass to output 702-m. This decision is made in the second illustrative embodiment in the same manner as in the first illustrative embodiment, as described above. When protocol-data-unit excisor 802 decides at task 1003 to drop a protocol data unit, control passes to subtask 1004; otherwise control passes to task 1005.

At subtask 1004, protocol-data-unit excisor 802 drops the protocol data unit under consideration. From subtask 1004, control passes back to subtask 1001.

At subtask 1005, protocol-data-unit excisor 802 forwards the protocol data unit under consideration. From subtask 1005, control passes back to subtask 1001.

It is to be understood that the above-described embodiments are merely illustrative of the present invention and that many variations of the above-described embodiments can be devised by those skilled in the art without departing from the scope of the invention. It is therefore intended that such variations be included within the scope of the following claims and their equivalents.

## Claims

1. A method comprising:
receiving at a protocol-data-unit excisor a metric of a queue in a first congestible node; and
selectively dropping, at said protocol-data-unit excisor, one or more protocol data units *en route* to said first congestible node based on said metric of said queue in said first congestible node.

2. The method of claim 1 wherein said protocol-data-unit excisor decides whether to drop a protocol data unit based on Random Early Detection.

3. The method of claim 1 further comprising:
receiving at said protocol-data-unit excisor a metric of a queue in a second congestible node; and
selectively dropping, at said protocol-data-unit excisor, one or more protocol data units *en route* to said second congestible node based on said metric of said queue in said second congestible node.

4. A protocol-data-unit excisor comprising:
a receiver for receiving a metric of a queue in a first congestible node; and
a processor for selectively dropping, at said protocol-data-unit excisor, one or more protocol data units *en route* to said first congestible node based on said metric of said queue in said first congestible node.

5. The protocol-data-unit excisor of claim 4 wherein said protocol-data-unit excisor decides whether to drop a protocol data unit based on Random Early Detection.

6. The protocol-data-unit excisor of claim 4 further comprising:
a receiver for receiving a metric of a queue in a second congestible node; and
a processor for selectively dropping, at said protocol-data-unit excisor, one or more protocol data units *en route* to said second congestible node based on said metric of said queue in said second congestible node.

7. A method comprising:
observing at a protocol-data-unit excisor the flow of protocol data units *en route* to a first congestible node;
estimating a metric of a queue of protocol data units in said first congestible node based on said flow of protocol data units; and
selectively dropping, at said protocol-data-unit excisor, one or more protocol data units *en route* to said first congestible node based on said metric of said queue of protocol data units in said first congestible node.

8. The method of claim 7 wherein said protocol-data-unit excisor decides whether to drop a protocol data unit based on Random Early Detection.

9. The method of claim 7 further comprising:
observing at said protocol-data-unit excisor the flow of protocol data units *en route* to a second congestible node;
estimating a metric of a queue of protocol data units in said second congestible node based on said flow of protocol data units; and
selectively dropping, at said protocol-data-unit excisor, a protocol data unit *en route* to said second congestible node based on said metric of said queue of protocol data units in said second congestible node.

10. A protocol-data-unit excisor comprising:
a transmitter arranged to observe the flow of protocol data units *en route* to a first congestible node; and
a processor for estimating a metric of a queue of protocol data units in said first congestible node based on said flow of protocol data units, and for selectively dropping one or more protocol data units *en route* to said first congestible node based on said metrics of said queue.

11. The protocol-data-unit excisor of claim 10 wherein said processor for selectively dropping one or more protocol data units decides whether to drop a protocol data unit based on Random Early Detection.

12. The protocol-data-unit excisor of claim 10 further comprising:
a transmitter arranged to observe the flow of protocol data units *en route* to a second congestible node; and
a processor for estimating a metric of a queue of protocol data units in said second congestible node based on said flow of protocol data units, and for selectively dropping one or more protocol data units *en route* to said second congestible node based on said metric of said queue of protocol data units in said second congestible node.
